# EUROPÄISCHE PATENTANMELDUNG

(11) **EP 3 653 396 A1**
(43) Veröffentlichungstag der Anmeldung: **20.05.2020**
(21) Anmeldenummer: 19207957.2
(22) Anmeldetag: 08.11.2019
(51) Int. Cl.: B42D 25/41, B42D 25/45, B42D 25/305, B42D 25/328, B42D 25/373, B60R 13/10

(54) **FOLIENVERBUND ZUR BESCHICHTUNG EINER KENNZEICHENPLATINE SOWIE KENNZEICHENPLATINE, VERFAHREN UND VORRICHTUNG ZU DEREN HERSTELLUNG**

(30) Priorität: 14.11.2018 DE 102018128608
(71) Anmelder: Erich Utsch AG, 57080 Siegen (DE)
(72) Erfinder: JUNG, Andreas, 57555 Mudersbach (DE); AX, Joachim, 57223 Kreuztal (DE); YILDIZ, Mehmet Fatih, 57462 Olpe (DE)
(74) Vertreter: Patentanwälte Bauer Vorberg Kayser

(57) **Zusammenfassung**

Die vorliegende Erfindung betrifft einen Folienverbund zur Beschichtung einer Kennzeichenplatine aufweisend:
- eine laserbeschreibbare Folie (20) mit einem auf der Folie (20) angeordnetem laserbeschreibbaren Sicherheitselement (30), wobei sowohl die Folie (20) als auch das Sicherheitselement (30) mindestens eine laserbeschreibbare Schicht umfassen, und
- mindestens eine individualisierte Information (40, 41), die mittels eines Lasers
i) in die laserbeschreibbare Schicht des Sicherheitselements (30) eingebrannt ist, oder
ii) in die laserbeschreibbare Schicht des Sicherheitselements (30) und der Folie (20) derart eingebrannt ist, dass die individualisierte Information (40) sich von dem Sicherheitselement (30) in die Folie (20) er-streckt oder umgekehrt.

## Beschreibung

Die vorliegende Anmeldung betrifft einen Folienverbund zur Beschichtung einer Kennzeichenplatine sowie ein Verfahren und eine Anlage zur Herstellung des erfindungsgemäßen Folienverbunds. Weiterhin betrifft die vorliegende Erfindung ein Verfahren sowie eine Anlage zur Herstellung einer Kennzeichenplatine umfassend den erfindungsgemäßen Folienverbund. Des Weiteren betrifft die vorliegende Erfindung ein Verfahren sowie eine Vorrichtung zur Individualisierung von Kennzeichen oder Kennzeichenplatinen umfassend den erfindungsgemäßen Folienverbund. Ein weiterer Gegenstand der vorliegenden Erfindung betrifft ein Kennzeichen oder eine Kennzeichenplatine mit einer individualisierten Information.

Aus dem Stand der Technik sind diverse Verfahren zur Verbesserung der Fälschungssicherheit von Kennzeichen oder Kennzeichenplatinen bekannt, die mit einer retroreflektierenden oder farbigen Folie beschichtet sind. So hat es sich als besonders vorteilhaft erwiesen, derartige Kennzeichen oder Kennzeichenplatinen mit zusätzlichen Sicherheitsmerkmalen, beispielsweise holografischen Elementen, zu versehen, um die Fälschungssicherheit zu erhöhen. Sicherheitsmerkmale, insbesondere in Form von holografischen Elementen, können ganz individuell gestaltet und mit den verschiedensten Merkmalen, wie z.B. einem Mikrotext, einem Nanotext oder einem Kippeffekt ausgestattet werden.

Zum Schutz vor äußeren Witterungseinflüssen und/oder einer Manipulation empfiehlt es sich, derartige Sicherheitsmerkmale in den Folienverbund des Kfz-Kennzeichenschilds zu integrieren, was jedoch nicht notwendigerweise erforderlich ist.

Obwohl die Fälschungssicherheit derartiger Kennzeichen oder Kennzeichenplatinen bereits sehr hohen Standards entspricht, ist es weiterhin wünschenswert, diese zu verbessern.

Der Erfindung liegt daher die Aufgabe zu Grunde ein Kennzeichen oder eine Kennzeichenplatine bereitzustellen, die eine gegenüber dem Stand der Technik verbesserte Fälschungssicherheit aufweist. Weiterhin ist Aufgabe der vorliegenden Erfindung ein Verfahren sowie Vorrichtung bereitzustellen, mit der ein Kennzeichen, eine Kennzeichenplatine oder ein Vorprodukt hiervon mit einer gegenüber dem Stand der Technik verbesserten Fälschungssicherheit hergestellt werden kann.

Gelöst wird diese Aufgabe durch einen Folienverbund mit den Merkmalen des Patentanspruchs 1 sowie einem Kennzeichen oder einer Kennzeichenplatine mit den Merkmalen des Patentanspruchs 15. Weiterhin wird die Aufgabe jeweils gelöst mit den Merkmalen der unabhängigen Ansprüche 8 bis 14.

Vorteilhafte Ausgestaltungen und Varianten der Erfindung ergeben sich aus den abhängigen Ansprüchen und der nachfolgenden Beschreibung. So können die in den Ansprüchen einzeln aufgeführten Merkmale in beliebiger, technisch sinnvoller Weise miteinander als auch mit den in der Beschreibung näher erläuterten Merkmalen kombiniert werden und andere vorteilhafte Ausführungsvarianten der Erfindung darstellen.

Erfindungsgemäß wird zunächst ein Folienverbund vorgeschlagen, der sich zur Beschichtung einer Kennzeichenplatine oder eines Halbfabrikats hiervon, beispielsweise in Form eines Trägersubstrats, eignet. Der erfindungsgemäße Folienverbund weist eine laserbeschreibbare Folie mit einem auf der Folie angeordnetem laserbeschreibbaren Sicherheitselement auf, wobei sowohl die Folie als auch das Sicherheitselement mindestens eine laserbeschreibbare Schicht umfassen. Weiterhin weist der erfindungsgemäße Folienverbund mindestens eine individualisierte Information auf, die mittels eines Lasers:
i) in die laserbeschreibbare Schicht des Sicherheitselements eingebrannt ist, oder
ii) in die laserbeschreibbare Schicht des Sicherheitselements und der Folie derart eingebrannt ist, dass die individualisierte Information sich von dem Sicherheitselement in die Folie hinein erstreckt oder umgekehrt.

Das Einbrennen mittels des Lasers führt dazu, dass ein Teil der laserbeschreibbaren Schicht abgetragen oder in seinen optischen Eigenschaften verändert und die individualisierte Information somit für einen Betrachter des Folienverbunds sichtbar wird. Durch die spezifische Kennzeichnung in Form der individualisierten Information wird die Fälschungssicherheit in hohem Maße erhöht. Dabei bleiben jegliche charakteristischen Sicherheitsmerkmale, die das Sicherheitselement aufweist, nahezu unverändert erhalten.

Als Laser können grundsätzlich alle dem Fachmann aus dem Stand der Technik bekannten Laser oder Kombinationen von Lasern verwendet werden, die eine elektromagnetische Strahlung mit einer Wellenlänge von 100 bis 3000 nm erzeugen und zum Ausbrennen der laserbeschreibbaren Schicht geeignet sind. Bevorzugt sind Nd:YAG-Laser und/oder CO₂-Laser. Der Laserstrahl kann dabei gepulst oder kontinuierlich sein.

Die zum Beschriften der laserbeschreibbaren Schicht sowie der Folie verwendete Laserintensität kann für Folie und Schicht gleich oder unterschiedlich sein. So hat es sich als besonders vorteilhaft erwiesen, wenn das Einbrennen der individualisierten Information in das Sicherheitsmerkmal mit einer höheren Laserintensität erfolgt als in die Folie, insbesondere retroreflektierende Folie. Je nach Beschaffenheit von Folie und laserbeschreibbarer Schicht kann aber auch eine höhere Laserintensität zum Beschriften der Folie als zum Beschriften der laserbeschreibbaren Schicht vorteilhaft sein.

In einer weiteren Ausführungsvariante hat es sich als besonders vorteilhaft erwiesen, für die jeweiligen unterschiedlichen Substrate, nämlich Sicherheitselement und Folie, unterschiedliche Lasertypen (Dauerstrichlaser vs. Pulslaser), unterschiedliche Wellenlängen, unterschiedliche Laserleistungen, unterschiedliche Pulsenergien oder/und unterschiedliche Pulsdauern zu verwenden.

In der Regel ist gewünscht, dass sich die in die unterschiedlichen Substrate, nämlich Sicherheitselement und Folie, eingebrannten individualisierten Informationen von ihrem optischen Aussehen her nicht wesentlich unterscheiden, insbesondere was die erzeugte Linienstärke bzw. Schwärzung betrifft.

Es kann aber auch gerade gewünscht sein, dass sich die in die unterschiedlichen Substrate, nämlich Sicherheitselement und Folie, eingebrannten individualisierten Informationen von ihrem optischen Aussehen her wahrnehmbar voneinander unterscheiden, insbesondere was die erzeugte Linienstärke bzw. Schwärzung betrifft. So kann es gewünscht sein, dass die im Sicherheitselement erzeugte Markierung eine deutlich höhere Schwärzung oder/und eine deutlich größere Linienbreite aufweist als die in der Folie erzeugte Markierung, oder umgekehrt.

Durch Verwendung geeigneter Laser ist es auch möglich, eine Laserung in einem oder beiden laserbeschrifteten Substraten zu erzeugen, die laserinduzierte, optisch wahrnehmbare Veränderungen im Volumen des Materials von Sicherheitselement oder/und Folie darstellen. In einer bevorzugten Weiterbildung sind diese Veränderungen vollständig in das Volumen des Materials eingebettet, insbesondere reichen sie nicht an die Oberfläche des Materials. Eine solche Laserung ist insbesondere durch eine Bestrahlung mittels gepulster Laserstrahlung mit einer Pulsdauer von 100 Ps und darunter, insbesondere im Bereich von 500 Fs und darunter, erzielbar. Bevorzugt ist die hierzu verwendete Laserstrahlung im Wesentlichen auf die Oberfläche des zu beschreibenden Substrats oder auf eine knapp unterhalb im Material liegende Fokusebene kollimiert. Typisch ist diese Fokusebene um einige zig bis einige hindert Mikrometer von der Oberfläche des Substrats beabstandet.

Das Einbrennen in die jeweiligen unterschiedlichen Substrate, nämlich Sicherheitselement und Folie, kann weiterhin aus unterschiedlichen Winkeln erfolgen, so dass die individualisierte Information nur in diesem spezifischen Winkel erscheint. Dies gilt insbesondere, wenn als Folie eine retroreflektierende Folie zum Einsatz kommt, insbesondere eine retroreflektierende Folie, die auf in eine transparente Binderschichte (zumindest teil-)eingebettete höherbrechende transparente Mikrokugeln/- linsen basiert.

Ferner kann das Einbrennen der individualisierten Information jeweiligen unterschiedlichen Substrate, nämlich Sicherheitselement und Folie, mittels einer sog. Maskenlaserung erfolgen, die dem Fachmann aus dem Stand der Technik bekannt ist. Bei der Maskenlaserung wird mit aufgeweiteter Laserstrahlung gearbeitet, die mittels einer für die Laserstrahlung undurchdringlichen Maske partiell abgeschattet wird, d.h. es wird mit dem Schattenwurf einer Maske gearbeitet.

Alternativ ist auch eine serielle Schreiblaserung möglich, die dem Fachmann ebenfalls aus dem Stand der Technik bekannt ist. Bei der Schreiblaserung wird ein fokussierter Laserstrahl über die Oberfläche des zu beschriftenden Substrats geführt, wobei sich die einzubringende Beschriftung seriell ausbildet. Die Steuerung des Laserstrahls in der Ebene der zu beschriftenden Substrate kann dabei über Spiegelscanner erfolgen. Bekannt ist z.B. die Verwendung von zwei voneinander unabhängigen Spiegelscannern, die den Laserstrahl jeweils in einer Raumrichtung ablenken.

Gemäß einer ersten erfindungsgemäßen Ausführungsvariante umfasst lediglich das Sicherheitselement eine individualisierte Information, die in der laserbeschreibbaren Schicht des Sicherheitselements ausgebildet ist.

Die individualisierte Information ist vorzugsweise ausgewählt aus der Gruppe umfassend Muster, Bilder, Symbole, Buchstaben, Zahlen, Strukturen, geometrische Formen, Nummerierungen, Wappen, Hoheitszeichen, Barcodes, Strichcodes, zweidimensionale Codes (QR-Codes), dreidimensionale Codes, Microglyphs® oder vergleichbare Mikrocodierungen und/oder Kombinationen hiervon.

Als Informationsinhalt für die individualisierte Information eignen sich beispielsweise Angaben wie Fahrgestellnummer, Kennzeichennummer, Ablaufdatum einer Zulassung oder/und Halter eines Fahrzeugs, Länder- und/oder Regionsangaben, oder ähnliches.

In einer weiteren erfindungsgemäßen Ausführungsvariante umfasst das Sicherheitselement eine individuelle Information, die sowohl in der laserbeschreibbaren Schicht des Sicherheitselements als auch in der laserbeschreibbaren Schicht der Folie ausgebildet ist. Die individualisierte Information erstreckt sich sodann von dem Sicherheitselement in die Folie hinein oder umgekehrt. Sofern die individualisierte Information beispielsweise aus einem alphanummerischen Zeichen besteht, so ist ein Fragment dieses Zeichen in der laserbeschreibbaren Schicht des Sicherheitselements und ein Rest des Zeichens in der laserbeschreibbaren Schicht der Folie eingebrannt. Die individualisierte Information ist somit in einem Randbereich des Sicherheitselements und einem diesen Randbereich direkt angrenzenden Bereich der Folie angeordnet.

Weiterhin kann eine individualisierte Information, die beispielsweise aus mehreren alphanummerischen Zeichen besteht, derart angeordnet sein, dass jedes alphanummerische Zeichen der individualisierten Information jeweils anteilig in die beiden laserbeschreibbaren Schichten eingebrannt ist. Die individualisierte Information ist sodann in dem Randbereich des Sicherheitselements und dem diesen Randbereich direkt angrenzenden Bereich der Folie angeordnet. Mit anderen Worten folgt die individuelle Information somit der Kontur des Sicherheitselements.

Weiterhin kann eine Kombination von alphanummerischen Zeichen, die die individualisierte Information ausbildet, derart positioniert werden, dass eine erste Teilmenge der alphanummerischen Zeichen lediglich in der laserbeschreibbaren Schicht des Sicherheitselements, eine zweite Teilmenge in beiden laserbeschreibbaren Schichten und eine dritte Teilmenge lediglich in der laserbeschreibbaren Schicht der Folie eingebrannt ist. Alternativ kann der bereits erläuterte Übergangsbereich ausgelassen werden, d.h. eine erste Teilmenge der individualisierten Information, beispielsweise zwei Zeichen, ist lediglich in der laserbeschreibbaren Schicht des Sicherheitselements und eine weitere Teilmenge, beispielsweise zwei weitere Zeichen, ist lediglich in der laserbeschreibbaren Schicht der Folie ausgebildet.

Gemäß einer bevorzugten Ausführungsvariante weist der erfindungsgemäße Folienverbund zusätzlich eine zweite individualisierte Information auf, die mittels des Lasers in
i) die laserbeschreibbare Schicht des Sicherheitselements eingebrannt ist, oder
ii) in die laserbeschreibbare Schicht des Sicherheitselements und der Folie derart eingebrannt ist, dass die zweite individualisierte Information sich von dem Sicherheitselement in die Folie hinein erstreckt oder umgekehrt.

So umfasst der Folienverbund gemäß einer ersten bevorzugten Ausführungsvariante ein laserbeschreibbares Sicherheitselement mit einer ersten und einer zweiten individualisierten Information, die beide innerhalb des Sicherheitselements, also lediglich in der laserbeschreibbaren Schicht des Sicherheitselement, ausgebildet sind. Die beiden individualisierten Informationen können dabei gleich oder unterschiedlich zueinander ausgebildet werden. So kann beispielsweise die erste individualisierte Information aus einer Kombination von alphanummerischen Zeichen und die zweite individualisierte Information aus einem Muster oder einem Symbol bestehen. Auch kann die erste Information aus einer Kombination von alphanummerischen Zeichens in einer ersten Schriftgröße und die zweite individualisierte Information aus der identischen Kombination von alphanummerischen Zeichen in einer kleineren oder größeren Schriftgröße ausgebildet sein. Grundsätzlich ist hierbei jede erdenkliche Kombination der zuvor genannten Gruppe möglich.

In einer weiteren bevorzugten Ausführungsvariante umfasst der Folienverbund das laserbeschreibbare Sicherheitselement mit einer ersten individualisierten Information, die lediglich in der laserbeschreibbaren Schicht des Sicherheitselements ausgebildet ist, und eine zweite individualisierte Information, die sowohl in der laserbeschreibbare Schicht des Sicherheitselements als auch in der laserbeschreibbaren Schicht der Folie ausgebildet ist. Die zweite individualisierte Information erstreckt sich sodann von dem Sicherheitselement in die Folie hinein oder umgekehrt.

In einer anderen bevorzugten Ausführungsvariante umfasst der Folienverbund das laserbeschreibbare Sicherheitselement, wobei sowohl die erste als auch die zweite individualisierte Information in der laserbeschreibbaren Schicht des Sicherheitselements als auch in der laserbeschreibbaren Schicht der Folie ausgebildet sind. Beide individualisierte Informationen erstrecken sich sodann von dem Sicherheitselement in die Folie hinein oder umgekehrt.

Gemäß einer besonders vorteilhaften Ausführungsvariante ist die laserbeschreibbare Folie eine retroreflektierende Folie und/oder eine farbige Folie, insbesondere eine retroreflektierende und/oder farbige Heißprägefolie.

Bei der retroreflektierenden Folie und/oder der farbigen Folie handelt es sich um eine kommerziell erhältliche Produkte. Die retroreflektierende Folie besteht im Wesentlichen aus einem spiegelndem Substrat, beispielsweise Aluminium, und einer darauf angeordneten oder von dieser beabstandeten Schicht von mikroskopisch kleinen Linsenelementen hoher optischer Qualität, die in einer transparenten Kunststoffschicht eingelassen sind. Die retroreflektierende Folie umfasst daher eine metallische Schicht, die mittels eines Lasers abtragbar ist. Die farbige Folie hingegen besteht aus einer transparenten Kunststoffschicht, in der eine entsprechende Farbpigmentlage eingebettet ist, die die laserbeschreibbare Schicht darstellt.

Vorzugsweise ist das laserbeschreibbare Sicherheitselement ausgewählt aus der Gruppe der holografischen Sicherheitselemente. Bei den holografischen Sicherheitselementen handelt es sich typischerweise um kommerziell erhältliche heißsiegelfähige Hologramme, die von einer Transferfolie übertragen werden können. Generell können alle dem Fachmann zum Anmeldezeitpunkt bekannten Hologramme verwendet werden.

Besonders bevorzugt ist vorgesehen, dass das holografische Sicherheitselement eine metallische Schicht umfasst, die mittels eines Lasers abtragbar ist.

Gemäß einer weiteren besonders bevorzugten Ausführungsvariante weist der Folienverbund eine transparente Schutzfolie auf, die als oberste Lage auf dem Folienverbund angeordnet ist, so dass das Sicherheitselement zwischen der laserbeschreibbaren Folie und der transparenten Schutzfolie eingebettet ist. Dadurch ergibt sich der Vorteil, dass das Sicherheitselement Wettereinflüssen nicht ausgesetzt ist und ein direkter Zugriff zum Zwecke einer Manipulation deutlich erschwert wird. Durch das Integrieren des Sicherheitselements in den Folienaufbau bieten der Folienverbund ein besonders hohes Maß an Fälschungssicherheit.

Gemäß einem weiteren Aspekt betrifft die vorliegende Erfindung ein Verfahren sowie eine Anlage zur Herstellung des erfindungsgemäßen Folienverbunds, bei dem es sich vorzugsweise um ein sogenanntes Rolle-zu-Rolle-Verfahren handelt. Hierbei wird in einem ersten Schritt eine laserbeschreibbare Folie sowie ein laserbeschreibbares Sicherheitselement bereitgestellt, wobei sowohl die Folie als auch das Sicherheitselement mindestens eine laserbeschreibbare Schicht umfassen. Um ein kontinuierlichen Herstellungsprozess zu gewährleisten, wird die laserbeschreibbare Folie vorzugsweise auf einer Vorratsrolle bereitgestellt und von dieser abgewickelt. In einem weiteren Schritt wird das Sicherheitselement auf die Folie in einer Aufbringstation aufgebracht. Vorzugsweise wird das Sicherheitselement jeweils in vordefinierten Folienabschnitten angeordnet, das mit dem Maß einer Kennzeichenplatine korreliert. In einem weiteren nachfolgenden Schritt wird in den erhaltenen Folienverbund einer Laserstation zugeführt, die beispielsweise einen Nd:YAG Laser umfasst, um mindestens eine individualisierte Information mittels eines Lasers in die laserbeschreibbare Schicht des Sicherheitselements, oder in die laserbeschreibbare Schicht des Sicherheitselements und der Folie derart einzubrennen, dass die individualisierte Information sich von dem Sicherheitselement in die Folie erstreckt oder umgekehrt. In einem weiteren bevorzugten Verfahrensschritt kann der sodann erhaltene Folienverbund auf eine Rolle aufgewickelt werden.

Der nach dem erfindungsgemäßen Verfahren hergestellte Folienverbund kann gemäß einem weiteren Aspekt zur Herstellung einer Kennzeichenplatine genutzt werden. Hierzu wird zunächst ein Trägersubstrat aus einem Material ausgewählt aus der Gruppe umfassend Holz, Kunststoff, oder Metall, vorzugsweise Aluminium, bereitgestellt. Alternativ kann die metallische Platine auch aus einem Stahlblech bestehen. Die Kunststoffplatine kann vorzugsweise aus einem Kunststoff bestehen ausgewählt aus der Gruppe der Polycarbonate oder Polyacrylate. Ein bevorzugtes Polyacrylat ist hierbei das Polymethylmethacrylat (PMMA). Anschließend wird der erfindungsgemäße Folienverbund, vorzugsweise in einer Kaschierstation oder Laminierstation, auf dem Trägersubstrat aufgebracht und aus dem sodann erhaltenen Verbund die gewünschten Kennzeichenplatinen in einer Schneidstation abgelängt.

In einem weiteren Aspekt betrifft die vorliegende Erfindung zudem ein Verfahren sowie eine Anlage zur Herstellung einer Kennzeichenplatine. Im Gegensatz zu dem bereits beschriebenen Rolle-zu-Rolle-Verfahren wird bei dem vorliegenden, sogenannten Inline-Prozess, in einem kontinuierlichen Verfahren eine Kennzeichenplatine hergestellt. Das Verfahren umfasst zunächst den Schritt des Bereitstellens einer laserbeschreibbaren Folie, vorzugsweise von einer Vorratsrolle, sowie eines laserbeschreibbaren Sicherheitselements, wobei sowohl die Folie als auch das Sicherheitselement mindestens eine laserbeschreibbare Schicht umfassen. Weiterhin wird in einer weiteren Station ein Trägersubstrat aus einem Material ausgewählt aus der Gruppe umfassend Holz, Kunststoff, oder Metall, vorzugsweise Aluminium, bereitgestellt. In einer nachfolgenden Folien-Aufbringstation, beispielsweise einer Kaschierstation, wird die Folie auf dem Trägersubstrat aufgebracht. In einem weiteren Schritt bzw. in einer weiteren Station wird sodann das Sicherheitselement auf die Folie aufgebracht. Vorzugsweise wird das Sicherheitselement in definierten Folienabschnitten positioniert. Anschließend wird der erhaltene Verbund einer Laserstation zugeführt, um mindestens eine individualisierte Information mittels des Lasers in die laserbeschreibbare Schicht des Sicherheitselements, oder in die laserbeschreibbare Schicht des Sicherheitselements und der Folie derart einzubrennen, dass die individualisierte Information sich von dem Sicherheitselement in die Folie erstreckt oder umgekehrt. In einem letzten Schritt bzw. in einer Ablängstation werden aus der individualisierten Verbund einzelne Kennzeichenplatinen abgelängt.

Weiterhin betrifft die vorliegende Erfindung in einem weiteren Aspekt ein Verfahren sowie eine Vorrichtung zur Individualisierung von Kennzeichen oder Kennzeichenplatinen. Mit dem vorliegend angegebenen Verfahren bzw. der Vorrichtung wird eine dezentralisierte Individualisierung von Kennzeichen oder Kennzeichenplatinen ermöglicht. Erfindungsgemäße wird zunächst ein Kennzeichen oder eine Kennzeichenplatine mit einer laserbeschreibbaren Folie und einem laserbeschreibbaren Sicherheitselement bereitgestellt, wobei sowohl die Folie als auch das Sicherheitselement mindestens eine laserbeschreibbare Schicht umfassen. Hierzu weist die erfindungsgemäße Vorrichtung ein entsprechendes Aufnahmefach auf, in dem das Kennzeichen oder die Kennzeichenplatine eingelegt und fixiert werden kann. Weiterhin weist die erfindungsgemäße Vorrichtung eine Lasereinheit auf, mit der sodann mindestens eine individualisierte Information in die laserbeschreibbare Schicht des Sicherheitselements, oder in die laserbeschreibbare Schicht des Sicherheitselements und der Folie derart eingebrannt werden kann, dass die individualisierte Information sich von dem Sicherheitselement in die Folie erstreckt oder umgekehrt.

Sofern mit einem der erfindungsgemäßen Verfahren lediglich Kennzeichenplatinen hergestellt werden, so werden diese in weiteren, in der Regel nachgelagerten, Verfahrensschritten mit einer individuellen Legende versehen. Dem Fachmann sind diverse Techniken aus dem Stand der Technik bekannt.

So kann die nach einem der erfindungsgemäßen Verfahren hergestellte Kennzeichenplatine beispielsweise mechanisch mittels geeigneter Prägewerkzeuge unter Verwendung einer Prägepresse geprägt werden kann, so dass eine erhabene Prägung gebildet wird. Die geprägte Legende wird anschließend zusätzlich eingefärbt, was insbesondere mittels eines Farbübertrags auf die erhaben geprägten Bereiche der Legende z.B. in einem Thermotransferverfahren von einer Heißprägefolie oder mittels Abwalzen mit einer Farbwalze möglich ist. Alternativ kann die Legende auch auf die vorderseitige Oberfläche des Schildrohlings aufgedruckt sein oder aber auch durch Anbringung von separat ausgebildeten individuellen Zeichen auf der vorderseitigen Oberfläche der Kennzeichenplatine ausgebildet werden.

Ein weiterer Aspekt der vorliegenden Erfindung betrifft ein Kennzeichen oder eine Kennzeichenplatine mit einer individualisierten Information aufweisend ein Trägersubstrat aus einem Material ausgewählt aus der Gruppe umfassend Holz, Kunststoff, oder Metall, vorzugsweise Aluminium, mit einer auf dem Träger angeordneten laserbeschreibbaren Folie und einem auf der Folie angeordnetem laserbeschreibbaren Sicherheitselement, wobei sowohl die Folie als auch das Sicherheitselement mindestens eine laserbeschreibbare Schicht umfassen. Das erfindungsgemäße Kennzeichen oder die erfindungsgemäße Kennzeichenplatine weist weiterhin mindestens eine individualisierte Information, die mittels eines Lasers in die laserbeschreibbare Schicht des Sicherheitselements eingebrannt ist, oder in die laserbeschreibbare Schicht des Sicherheitselements und der Folie derart eingebrannt ist, dass die individualisierte Information sich von dem Sicherheitselement in die Folie erstreckt oder umgekehrt.

Nachfolgend wird die vorliegende Erfindung anhand einer schematischen Darstellung näher erläutert. In dieser zeigen:
- Fig.1: ein fälschungssicheres Kennzeichen in Aufsicht gemäß einem ersten Ausführungsbeispiel,
- Fig.2: das fälschungssichere Kennzeichen aus Fig. 1 in seitlicher Schnittdarstellung,
- Fig.3: einen Ausschnitt eines Kennzeichens mit einer individualisierten Information gemäß einem zweiten Ausführungsbeispiel,
- Fig.4: einen Ausschnitt eines Kennzeichens mit einer individualisierten Information gemäß einem dritten Ausführungsbeispiel,
- Fig.5: einen Ausschnitt eines Kennzeichens mit einer individualisierten Information gemäß einem vierten Ausführungsbeispiel
- Fig.6: einen Ausschnitt eines Kennzeichens mit einer individualisierten Information gemäß einem fünften Ausführungsbeispiel,
- Fig.7: einen Ausschnitt eines Kennzeichens mit einer individualisierten Information gemäß einem sechsten Ausführungsbeispiel
- Fig.8: einen Ausschnitt eines Kennzeichens mit einer individualisierten Information gemäß einem siebenten Ausführungsbeispiel, und
- Fig.9: einen Ausschnitt eines Kennzeichens in Aufsicht mit einer individualisierten Information gemäß einem achten Ausführungsbeispiel.

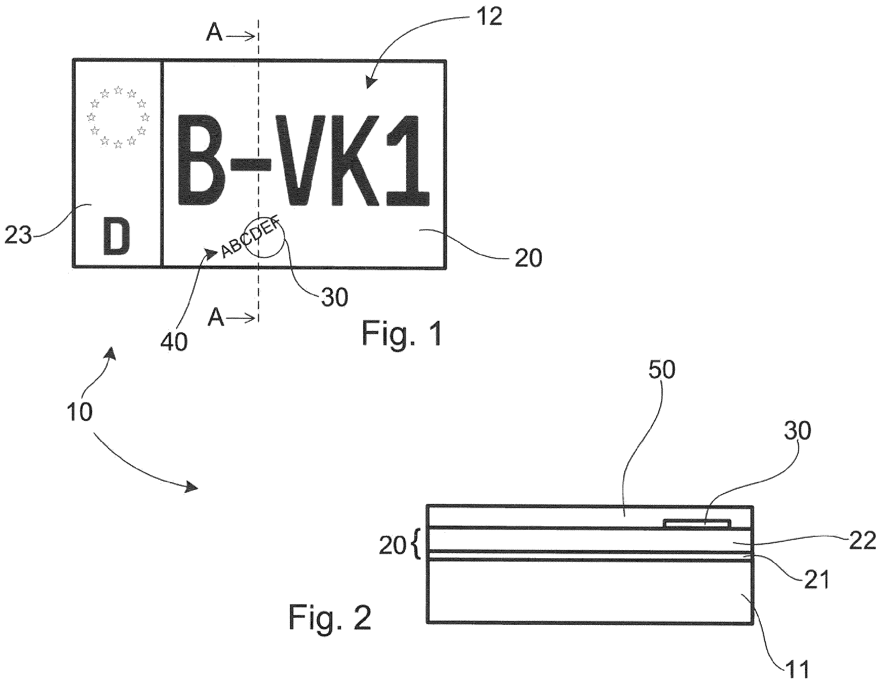

Fig. 1 zeigt ein retroreflektierendes Kennzeichen 10 in Aufsicht mit einem holografischen Sicherheitselement 30 und einer individualisierten Information gemäß einem ersten Ausführungsbeispiel. Das Kennzeichen 10 basiert auf einem metallischen Träger 11, beispielsweise aus Aluminium, auf das vorderflächig eine retroreflektierende Folie 20 auflaminiert ist. Diese weist einen farbigen Bereich 23 auf, in dem z.B. Hoheitszeichen des Zulassungsstaats angeordnet sein können. Im gezeigten Ausführungsbeispiel handelt es sich bei dem farbigen Bereich 23 um ein an der linken Seite des Kennzeichens 10 angeordnetes blaues Band, in dem einerseits das Länderkürzel "D" für Deutschland und andererseits das Hoheitssymbol der Europäischen Union angeordnet sind.

Das Kennzeichen 10 weist weiterhin eine erhaben geprägte individuelle Kennzeichenlegende 12 auf, deren erhabene Bereiche mittels Farbübertrag von einer Thermotransferfolie schwarz eingefärbt sind.

Weiterhin umfasst das Kennzeichen 10 ein holografisches Sicherheitselement 30, insbesondere ein Hologramm, sowie eine individuelle Information 40, die mittels eines Nd-YAG-Lasers (nicht dargestellt) in die metallische Schicht (nicht dargestellt) des holografischen Sicherheitselements 40 und der retroreflektierenden Folie 20 eingebrannt worden ist.

In dem hier gezeigten Ausführungsbeispiel gemäß Fig.1 und 2 ist das holografische Sicherheitselement 30 auf die außenseitige Oberfläche der retroreflektierenden Folie 20 aufgebracht, wie dies in Fig. 2 dargestellt ist. Fig. 2 zeigt einen Schnitt durch das Kennzeichen 10 aus Fig. 1 entlang der Schnittlinie A-A. Die retroreflektierende Folie 20/22, welche z.B. auf in einen transparenten Kunststoff eingebetteten Mikrolinsen (sogenannten "Glasbeads") mit metallischer Reflektorschicht (nicht dargestellt) basiert, ist durch eine Klebstoffschicht 21 mit dem metallischen, mechanisch prägbaren Träger 11 verbunden. Weiterhin umfasst das Kennzeichen 10 als oberste Lage eine transparenten Schutzfolie 50, die das holografische Sicherheitselement 30 vor der Witterung und einem direkten Zugriff zusätzlich sichert.

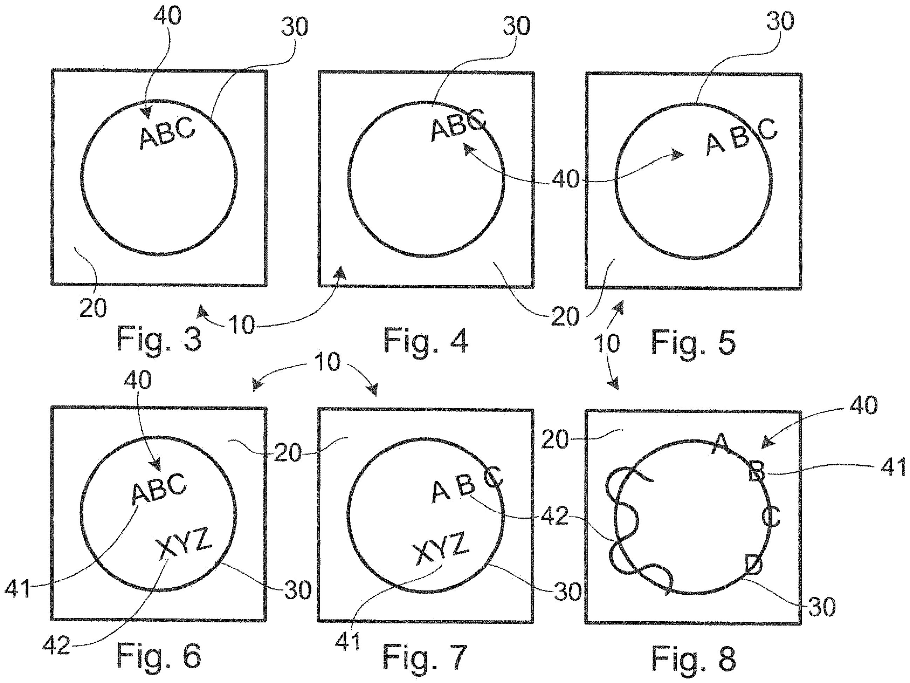

Figuren 3 bis 8 zeigen jeweils einen Ausschnitt eines Kennzeichens 10 mit einer retroreflektierenden Folie 20 und einem auf der äußeren Oberfläche der Folie 20 angeordneten holografischen Sicherheitselement 30 sowie unterschiedlichen Ausführungsbeispielen einer individuellen Information 40.

Gemäß dem in Figur 3 gezeigten Ausführungsbeispiel umfasst lediglich das holografische Sicherheitselement 30 eine individualisierte Information 40 in der alphanummerischen Kombination "ABC", die lediglich in der metallischen Schicht (nicht dargestellt) des holografischen Sicherheitselements 30 ausgebildet ist.

In dem in Figur 4 gezeigten Ausführungsbeispiel umfasst das holografische Sicherheitselement 30 eine individuelle Information 40, die sowohl in der metallischen Schicht (nicht dargestellt) des holografischen Sicherheitselements 30 als auch in der metallischen Schicht (nicht dargestellt) der retroreflektierenden Folie 20 ausgebildet ist. Die individualisierte Information 40 erstreckt in dem dargestellten Ausführungsbeispiel von dem holografischen Sicherheitselement 30 in die retroreflektierende Folie 40 hinein. Die individualisierte Information 40, die aus der alphanummerischen Zeichenkombination "ABC" gebildet wird, ist derart angeordnet, dass ein Fragment des Zeichens "C" in der metallischen Schicht des holografischen Sicherheitselements 30 und ein Rest des Zeichens "C" in die metallische Schicht der retroreflektierenden Folie 20 eingebrannt ist. Die individualisierte Information 40 bzw. ein Teil dieser Information 40 ist somit in einem Randbereich des holografischen Sicherheitselements 30 und einem diesen Randbereich direkt angrenzenden Bereich der retroreflektierenden Folie 20 angeordnet.

In Figur 5 ist ein weiteres Ausführungsbeispiel gezeigt mit einer individuellen Information umfassend die alphanummerische Zeichenkombination "ABC", wobei die individualisierte Information 30 derart angeordnet ist, dass eine erste Teilmenge der alphanummerischen Zeichen "AB" lediglich in der metallischen Schicht (nicht dargestellt) des holografischen Sicherheitselements 30 und die restliche Teilmenge "C" in der metallischen Schicht (nicht dargestellt) der retroreflektierenden Folie 20 eingebrannt ist.

Figur 6 zeigt ein Ausführungsbeispiel mit einer ersten und einer zweiten individuellen Information 41/42. Wie anhand von Figur 6 dargestellt, sind beiden Informationen 41/42 lediglich in der metallischen Schicht (nicht dargestellt) des holografischen Sicherheitselement 30 ausgebildet. Die beiden individualisierten Informationen 41/42 weisen jeweils unterschiedliche alphanummerische Zeichenkombinationen auf.

Ein weiteres Ausführungsbeispiel ist in Figur 7 gezeigt, mit einer ersten individualisierten Information 41, die lediglich in der metallischen Schicht (nicht dargestellt) des holografischen Sicherheitselements 30 ausgebildet ist, und eine zweite individualisierte Information 42, die sowohl in der metallischen Schicht (nicht dargestellt) des holografischen Sicherheitselements 30 als auch in der metallischen Schicht (nicht dargestellt) der retroreflektierenden Folie 20 ausgebildet ist. Wie anhand von Figur 7 erkennbar, erstreckt sich die zweite individualisierte Information 42 von dem holografischen Sicherheitselement 30 in die retroreflektierende Folie 20 hinein.

Des Weiteren wird in Figur 8 ein Ausführungsbeispiel dargestellt, wobei sowohl die erste als auch die zweite individualisierte Information 41/42 in der metallischen Schicht (nicht dargestellt) des holografischen Sicherheitselements 30 als auch in der metallischen Schicht (nicht dargestellt) der retroreflektierenden Folie 20 ausgebildet sind. Die erste individuelle Information 41 wird aus der alphanummerischen Zeichenkombination "ABCD" gebildet, wobei jedes der Zeichen "A, B, C bzw. D" jeweils anteilig in die beiden metallischen Schichten (nicht dargestellt) eingebrannt ist. Die individualisierte Information 41 ist sodann in dem Randbereich des holografischen Sicherheitselements 30 und dem diesen Randbereich direkt angrenzenden Bereich der retroreflektierenden Folie 20 angeordnet und folgt somit der Kontur des holografischen Sicherheitselements 30. Die zweite individuelle Information 42 umfasst eine Wellenlinie, die ebenfalls in beiden metallischen Schichten (nicht dargestellt) eingebrannt ist.

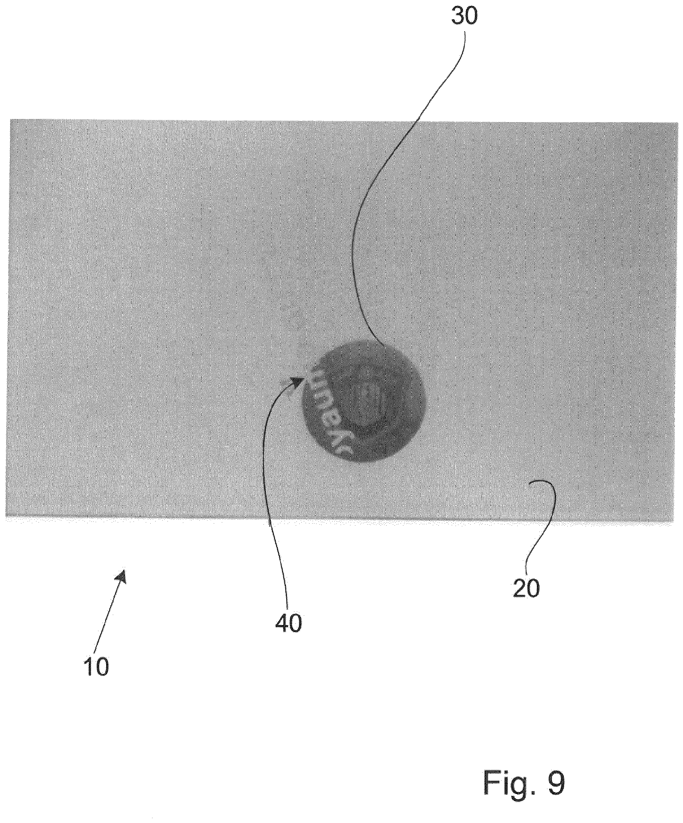

Ein weiteres Ausführungsbeispiel ist schließlich in Figur 9 dargestellt. Dieses zeigt ebenfalls einen Ausschnitt eines Kennzeichens mit einer retroreflektierenden Folie 20 und einem auf der Folie 20 angeordnetem Hologramm 30. Weiterhin umfasst das Kennzeichen 10 eine individualisierte Information 40 in Form einer alphanummerischen Zeichenkombination, die in beide metallischen Schichten eingebrannt worden ist.

### Bezugszeichenliste

- 10: Kennzeichen
- 11: Träger
- 12: Legende
- 20/21: retroreflektierende Folie
- 22: Klebeschicht
- 30: holografisches Sicherheitselement
- 40: individualisierte Information
- 41: erste individualisierte Information
- 42: zweite individualisierte Information
- 50: transparenten Schutzfolie

## Patentansprüche

1. Folienverbund zur Beschichtung einer Kennzeichenplatine aufweisend:
- eine laserbeschreibbare Folie (20) mit einem auf der Folie (20) angeordnetem laserbeschreibbaren Sicherheitselement (30), wobei sowohl die Folie (20) als auch das Sicherheitselement (30) mindestens eine laserbeschreibbare Schicht umfassen, und
- mindestens eine individualisierte Information (40, 41), die mittels eines Lasers
i) in die laserbeschreibbare Schicht des Sicherheitselements (30) eingebrannt ist, oder
ii) in die laserbeschreibbare Schicht des Sicherheitselements (30) und der Folie (20) derart eingebrannt ist, dass die individualisierte Information (40) sich von dem Sicherheitselement (30) in die Folie (20) erstreckt oder umgekehrt.

2. Folienverbund nach Anspruch 1, weiterhin aufweisend eine zweite individualisierte Information (40, 42), die mittels des Lasers in
i) in die laserbeschreibbare Schicht des Sicherheitselements (30) eingebrannt ist, oder
ii) in die laserbeschreibbare Schicht des Sicherheitselements (30) und der Folie (20) derart eingebrannt ist, dass die zweite individualisierte Information sich von dem Sicherheitselement (30) in die Folie (20) erstreckt oder umgekehrt.

3. Folienverbund nach Anspruch 1 oder 2, wobei die laserbeschreibbare Folie (20) eine retroreflektierende Folie und/oder eine farbige Folie, insbesondere eine retroreflektierende und/oder farbige Heißprägefolie ist.

4. Folienverbund nach einem der vorhergehenden Ansprüche, wobei das laserbeschreibbare Sicherheitselement (30) ein holografisches Sicherheitselement ist.

5. Folienverbund nach einem der vorhergehenden Ansprüche 3 oder 4, wobei die retroreflektierende Folie (20) und/oder das holografische Sicherheitselement (30) eine metallische Schicht umfassen.

6. Folienverbund nach einem der vorhergehenden Ansprüche, wobei die individualisierte Information (40) ausgewählt ist aus der Gruppe umfassend Muster, Bilder, Symbole, Buchstaben, Zahlen, Strukturen, geometrische Formen, Nummerierungen, Wappen, Hoheitszeichen, Barcodes, Strichcodes und/oder Kombinationen hiervon.

7. Folienverbund nach einem der vorhergehenden Ansprüche, weiterhin aufweisend eine transparente Schutzfolie (50), die als oberste Lage auf dem Folienverbund angeordnet ist, so dass das Sicherheitselement (30) zwischen der laserbeschreibbaren Folie (20) und der transparenten Schutzfolie (50) eingebettet ist.

8. Verfahren zu Herstellung eines Folienverbunds aufweisend die Schritte:
- Bereitstellen einer laserbeschreibbaren Folie (20), vorzugsweise von einer Vorratsrolle, sowie eines laserbeschreibbaren Sicherheitselements (30), wobei sowohl die Folie (20) als auch das Sicherheitselement (30) mindestens eine laserbeschreibbare Schicht umfassen,
- Aufbringen des Sicherheitselements (30) auf die Folie (20), vorzugsweise in vordefinierten Folienabschnitten, und
- Einbrennen mindestens einer individualisierten Information (40) mittels eines Lasers
i) in die laserbeschreibbare Schicht des Sicherheitselements (30), oder
ii) in die laserbeschreibbare Schicht des Sicherheitselements (30) und der Folie (20) derart, dass die individualisierte Information (40) sich von dem Sicherheitselement (30) in die Folie (20) erstreckt oder umgekehrt.

9. Anlage zur Herstellung eines Folienverbunds aufweisend:
- eine Station zur Bereitstellung einer laserbeschreibbaren Folie (20), vorzugsweise eine Abrollstation,
- eine Aufbringstation zum Aufbringen eines laserbeschreibbaren Sicherheitselements (30) auf die Folie (20), und
- eine Laserstation zum Einbrennen mindestens einer individualisierten Information (40) mittels eines Lasers in die laserbeschreibbare Schicht des Sicherheitselements (30), oder in die laserbeschreibbare Schicht des Sicherheitselements (30) und der Folie (20) derart, dass die individualisierte Information (40) sich von dem Sicherheitselement (30) in die Folie (20) erstreckt oder umgekehrt.

10. Verfahren zur Herstellung einer Kennzeichenplatine umfassend die Schritte:
- Bereitstellen eines Trägersubstrats (11) aus einem Material ausgewählt aus der Gruppe umfassend Holz, Kunststoff, oder Metall, vorzugsweise Aluminium, und
- Aufbringen eines Folienverbunds nach einem der Ansprüche 1 bis 7 auf dem Trägersubstrat (11), und
- Ablängen einer Kennzeichenplatine.

11. Verfahren zur Herstellung einer Kennzeichenplatine aufweisend die Schritte:
- Bereitstellen einer laserbeschreibbaren Folie (20), vorzugsweise von einer Vorratsrolle, sowie eines laserbeschreibbaren Sicherheitselements (30), wobei sowohl die Folie (20) als auch das Sicherheitselement (30) mindestens eine laserbeschreibbare Schicht umfassen,
- Bereitstellen eines Trägersubstrats (11) aus einem Material ausgewählt aus der Gruppe umfassend Holz, Kunststoff, oder Metall, vorzugsweise Aluminium,
- Aufbringen der Folie (20) auf dem Trägersubstrat (11),
- Aufbringen des Sicherheitselements (30) auf die Folie (20), vorzugsweise in definierten Abschnitten,
- Einbrennen mindestens einer individualisierten Information (40) mittels eines Lasers
i) in die laserbeschreibbare Schicht des Sicherheitselements (30), oder
ii) in die laserbeschreibbare Schicht des Sicherheitselements (30) und der Folie (20) derart, dass die individualisierte Information (40) sich von dem Sicherheitselement (30) in die Folie (20) erstreckt oder umgekehrt, und
- Ablängen einer Kennzeichenplatine.

12. Anlage zur Herstellung einer Kennzeichenplatine aufweisend:
- eine Station zur Bereitstellung eines Trägersubstrats (11) aus einem Material ausgewählt aus der Gruppe umfassend Holz, Kunststoff, oder Metall, vorzugsweise Aluminium,
- eine Station zur Bereitstellung einer laserbeschreibbaren Folie (20), vorzugsweise eine Abrollstation,
- eine Folien-Aufbringstation zum Aufbringen der Folie (20) auf dem Trägersubstrat (11),
- eine Sicherheitselement-Aufbringstation zum Aufbringen eines laserbeschreibbaren Sicherheitselements (30) auf die Folie (20),
- eine Laserstation zum Einbrennen mindestens einer individualisierten Information (40) mittels eines Lasers in die laserbeschreibbare Schicht des Sicherheitselements (30), oder in die laserbeschreibbare Schicht des Sicherheitselements (30) und der Folie (20) derart, dass die individualisierte Information (40) sich von dem Sicherheitselement (30) in die Folie (20) erstreckt oder umgekehrt, und
- eine Ablängstation zum Ablängen der Kennzeichenplatine.

13. Verfahren zur Individualisierung von Kennzeichen (10) oder Kennzeichenplatinen umfassend die Schritte:
- Bereitstellen eines Kennzeichens (10) oder einer Kennzeichenplatine mit einer laserbeschreibbaren Folie (20) und einem laserbeschreibbaren Sicherheitselement (30), wobei sowohl die Folie (20) als auch das Sicherheitselement (30) mindestens eine laserbeschreibbare Schicht umfassen,
- Einbrennen mindestens einer individualisierten Information (40) mittels eines Lasers
i) in die laserbeschreibbare Schicht des Sicherheitselements (30), oder
ii) in die laserbeschreibbare Schicht des Sicherheitselements (30) und der Folie (20) derart, dass die individualisierte Information (40) sich von dem Sicherheitselement (30) in die Folie (20) erstreckt oder umgekehrt.

14. Vorrichtung zur Individualisierung von Kennzeichen (10) oder Kennzeichenplatinen, die eine laserbeschreibbare Folie (20) und ein laserbeschreibbares Sicherheitselement (30) umfassen, aufweisend:
- eine Kennzeichen- oder Kennzeichenplatinen-Aufnahmefach, und
- eine Lasereinheit zum Einbrennen mindestens einer individualisierten Information (40) mittels eines Lasers in die laserbeschreibbare Schicht des Sicherheitselements (30), oder in die laserbeschreibbare Schicht des Sicherheitselements (30) und der Folie (20) derart, dass die individualisierte Information (40) sich von dem Sicherheitselement (30) in die Folie (20) erstreckt oder umgekehrt

15. Kennzeichen (10) oder Kennzeichenplatine mit einer individualisierten Information (40) aufweisend:
- ein Trägersubstrat (11) aus einem Material ausgewählt aus der Gruppe umfassend Holz, Kunststoff, oder Metall, vorzugsweise Aluminium,
- eine auf dem Trägersubstrat (11) angeordnete laserbeschreibbare Folie (20) mit einem auf der Folie (20) angeordnetem laserbeschreibbaren Sicherheitselement (30), wobei sowohl die Folie (20) als auch das Sicherheitselement (30) mindestens eine laserbeschreibbare Schicht umfassen, und
- mindestens eine individualisierte Information (40), die mittels eines Lasers
i) in die laserbeschreibbare Schicht des Sicherheitselements (30) eingebrannt ist, oder
ii) in die laserbeschreibbare Schicht des Sicherheitselements (30) und der Folie (20) derart eingebrannt ist, dass die individualisierte Information (40) sich von dem Sicherheitselement (30) in die Folie (20) erstreckt oder umgekehrt.
